# EUROPÄISCHE PATENTSCHRIFT

(11) **EP 0 976 581 B1**
(45) Veröffentlichungstag und Bekanntmachung des Hinweises auf die Patenterteilung: **29.10.2003**
(21) Anmeldenummer: 99113692.0
(22) Anmeldetag: 16.07.1999
(51) Int. Cl.: B60B 17/00

(54) **Einspannvorrichtung für Schienenräder und entsprechendes Einspannverfahren**
Clamping device for rail vehicles and corresponding fixing method
Dispositif de fixation pour roues ferroviaires et méthode correspondante pour fixer

(30) Priorität: 17.07.1998 DE 19832266
(43) Veröffentlichungstag der Anmeldung: 02.02.2000
(73) Patentinhaber: Schrey & Veit GmbH, 55576 Sprendlingen (DE)
(72) Erfinder: Veit, Günther, 55411 Bingen (DE)
(74) Vertreter: Barth, Stephan Manuel, Dr.

(56) Entgegenhaltungen:
- DE-A- 3 120 068
- DE-C- 3 316 759
- DE-U- 8 313 568

## Beschreibung

Die vorliegende Erfindung betrifft eine Einspannvorrichtung für ein Schienenrad, und insbesondere eine Einspannvorrichtung für ein Schienenrad zum Einspannen eines daran anbringbaren Schwingungsabsorbersystems in das Schienenrad. Ebenfalls betrifft die vorliegende Erfindung ein entsprechendes Einspannverfahren.

Obwohl auf beliebige Einspannvorrichtungen anwendbar, werden die vorliegende Erfindung sowie die ihr zugrundeliegende Problematik in bezug auf solch eine Einspannvorrichtung für ein Schienenrad zum Einspannen eines daran anbringbaren Schwingungsabsorbersystems erläutert.

Es gehört mittlerweile zum allgemeinen Stand der Technik, daß Schienenräder mit Schwingungsabsorbern gedämpft werden, um deren Körperschallabstrahlung zu verringern. Diese Schwingungsabsorber werden üblicherweise kraftschlüssig an einer auf der Innenseite im Schienenrad befindlichen Nut, wie aus dem europäischen Patent EP 0 047 385 B1 bekannt, an Gewindebohrungen im Schienenrad oder an einer Halterung, wie aus dem Gebrauchsmuster G 81 14 906.9 bekannt, die in das Schienenrad eingeklemmt oder eingeschrumpft wird, montiert. Bei den bekannten Systemen sind im allgemeinen die Schwingungsabsorber hinsichtlich ihrer dynamischen Eigenschaften an das jeweilige Schienenrad angepaßt und verwenden ein aus einem elastomeren Werkstoff wie Kunststoff, Gummi oder Silikon bestehendes Dämpfungsmaterial.

Die DE 83 13 568.5 U1 offenbart ein geräuschgedämpftes Schienenrad mit einem am Radkranz bzw. Radreifen angeordneten, ringförmigen Dämpfungsglied aus konzentrisch zueinander angeordneten Elementen, die abwechselnd aus Metall und Kunststoffmaterial bestehen. Die aus Metall bestehenden Elemente sind ohne gegenseitige metallische Berührung zwischen den Elementen aus Kunststoffmaterial angeordnet. Das Dämpfungsglied wird mit Hilfe eines Spreizringes gehalten, der aus segmentartigen Abschnitten besteht, die durch ein Spreizorgan verbunden sind. Der Spreizring ist in den Radkranz bzw. Radreifen eingesetzt. Die Segmente des Spreizringes, an denen die vorgespannten Dämpfungsglieder befestigt sind, sind an ihrem Ende jeweils mit einem Kloben verlängert, wobei sich zwischen zwei einander gegenüberliegender Kloben benachbarter Segmente im Querschnittsbereich von Spreizring und Dämpfungsglied das Spreizorgan befindet.

Die DE 31 20 068 C2 offenbart ein geräuschgedämpftes Schienenrad mit mindestens einem am Radkranz bzw. der Radfelge angeordneten, ringförmigen Dämpfungsglied aus konzentrisch zueinander angeordneten Elementen, die abwechselnd aus Metall- und Kunststoffmaterial bestehen, wobei die aus Metall bestehenden Elemente ohne gegenseitige metallische Berührung zwischen den Elementen aus Kunststoffmaterial angeordnet sind. Das Dämpfungsglied ist hier im wesentlichen radial vorgespannt. Insbesondere ist das ringförmige Dämpfungsglied in den Radkranz bzw. die Radfelge eingesetzt, wobei die im wesentlichen radiale Vorspannung durch einen in das ringförmige Dämpfungsglied eingesetzten Spannring bzw. Spreizring erzeugt wird. Weiterhin offenbart diese Druckschrift, daß der Spreizring aus segmentartigen Abschnitten besteht und die segmentartigen Abschnitte durch Gewindebolzen verbindbar sind, die durch entsprechendes Verdrehen den Spreizring auf einen größeren Durchmesser bringen.

Die DE 32 43 028 C1 offenbart ein geräuschgedämpftes Schienenrad mit mindestens einem an der Felge des Schienenrades befestigten ringförmigen Dämpfungsorgan, wobei als Dämpfungsorgan einem mit einem geräuschdämpfenden Material ganz oder teilweise gefülltes Rohr längs des Innenumfanges der Felge mit dieser verbunden ist. Das zu einem Ring gebogene elastische Rohr rastet unter der Wirkung elastischer Kräfte in einer an der Felgeninnenseite eingearbeitete Ausnehmung federnd ein. Das Rohr besteht aus einzelnen Rohrabschnitten, die ineinander steckbar sind und insgesamt zu einem geschlossenen Rohr vereinigbar sind.

Die DE 33 16 759 C1 offenbart ein geräuschgedämpftes Schienenrad, dessen Radkranz oder Radreifen am Innenumfang segmentartig aufgebaute Dämpfungsglieder aufweist. Die Dämpfungsglieder sind an Segmenten eines Ringes befestigt, wobei die Segmente des Ringes in den Innenumfang des Radkranzes oder Radreifens eingesetzt sind. Die Segmente sind durch mindestens ein Spreizorgan zu einem die Dämpfungsglieder tragenden Ring verspannt. Zwischen den an den Enden der Segmente des Spreizringes befindlichen Kloben, die zwischen sich eine keilförmige Öffnung bilden, befindet sich ein Spannteil.

Die DE 195 42 342 A1 offenbart ein schallgedämpftes Scheibenrad, wobei an der Unterseite des Radkranzes bzw. Radreifens mindestens eine umlaufende Aussparung zum Einschrumpfen eines metallischen Dämpfungsringes mit viereckigen Querschnitt eingearbeitet ist. Der Dämpfungsring wird durch eine Preßpassung an der Innenfläche des Schienenrades festgehalten. Die Dämpfung dieser Maßnahme wird erreicht durch die allgemein so bezeichnete Fügedämpfung, die durch Reibung zwischen den Fügestellen Dämpfungsring/Schienenrad entsteht. Ein Nachteil dieser Maßnahme ist die sehr begrenzte Wirksamkeit bezüglich dem zu bedämpfenden Frequenzbereich. Weitere Nachteile sind der noch nicht bekannte Einfluß der Korrosion bzw. der Kontaktkorrosion zwischen dem Metallring und dem Schienenradreifen sowie der recht hohe Energieeinsatz beim zur Schrumpfung des Metallrings notwendigen Abkühlung bzw. beim Erwärmen des Schienenrades.

Die DE 196 17 684 A1 offenbart ein schallgedämpftes Schienenrad mit einer am Steg zwischen Nabe und Radkranz lösbar befestigten Radbremsscheibe oder ein schallgedämpftes Schienenrad ohne Radbremsscheibe, wobei an den Unterseiten des Radkranzes beidseitig vom Steg umlaufender Aussparungen zum Einlegen von Dämpfungsringen eingearbeitet sind und zwischen den Aussparungen und Dämpfungsringen ein Dämpfungsmaterial eingebracht ist. Das Dämpfungsmaterial besteht aus einem selbstklebenden viscoelastischen, temperaturbeständigen Material, daß im eingebauten Zustand eine Dicke von maximal 1 mm, vorzugsweise 0,1 bis 0,5 mm, besitzt.

Die DE 31 13 268 C2 offenbart einen Schwingungsabsorber zur Körperschalldämpfung mit einem Wellenleiter in Form eines sich in Wellenlaufrichtung verjüngenden Hornteils, welcher zumindest mit dem breiteren Ende mit einem zu bedämpfenden Körper kraftschlüssig verbindbar ist und welcher zumindest im Bereich des schmaleren Endes ein Dämpfungsmaterial aufweist. Der Wellenleiter weist eine in Wellenlaufrichtung abwechselnde Schichtfolge von flexiblen Federelementen und festen Massenelementen auf, wobei die Federkonstanten der Federelemente und die Massen der Massenelemente vom breiteren Ende des Wellenleiters aus stetig abnehmen.

Die DE 43 43 008 C2 offenbart ein Resonanzabsorber zur Dämpfung von Körperschallschwingungen mit einer Anzahl von freischwingenden Zungen mit unterschiedlichen Resonanzfrequenzen, wobei die Zungen als Doppelzungen mit einem jeweils zwischen den beiden Zungenelementen eingezwängten Dämpfungsbelag ausgebildet und an einer gemeinsamen, mit einer zu bedämpfenden körperverbindbaren Basis angeordnet sind. Eine Lage von Doppelzungen unterschiedlicher Längen ist durch kammartiges Einschneiden zweier deckungsgleicher, rechteckiger oder quadratischer Platten an zwei gegenüberliegenden Seiten unter Beibehaltung eines zentralen, schräg über die Plattenfläche verlaufenden Basisstreifens gebildet. Mehrere Lagen von Doppelzungen mit unterschiedlichen Dicken und deckungsgleichen Basisstreifen sind übereinander gestapelt, wobei die Enden der Doppelzungen freistehend sind, die Basisstreifen jedoch in Kontakt zueinander stehen.

Die DE 43 37 162 A1 beschreibt einen Schwingungsabsorber zur Körperschalldämpfung. Dieser bekannte Schwingungsabsorber weist einen Wellenleiter auf, welcher in Wellenlaufrichtung eine Schichtfolge aus Masse-Feder-Elementen aufweist. Die Masse-Feder-Elemente sind als Biegebalken oder - Platten mit in Wellenlaufrichtung abnehmender Federsteifigkeit ausgebildet und sind über versetzt zueinander angeordnete Distanzhalter kraft- und/oder momentschlüssig miteinander verbunden. Bei Druck oder Zug erfolgt eine Durchbiegung innerhalb mindestens eines Masse-Feder-Elementes.

Die DE 44 42 779 C2 offenbart einen Schwingungsabsorber mit einer davon lösbaren Halterung zur radialen Befestigung des Schwingungsabsorbers an einer Innenfläche eines Schienenradreifens, wobei mehrere Halterungen gleichmäßig über den Umfang der Innenfläche verteilt und mit je einer dem Krümmungsradius der Innenfläche angepaßten Fläche akustisch gut leitend an den Schienenradreifen ankoppelbar sind. An jeder Halterung ist mindestens ein aus einer in radialer Richtung verlaufender Schichtfolge von Metall- oder Kunststoffplatten bestehender Schwingungsabsorber über eine Koppelfläche akustisch wirksam ankoppelbar. Der Schwingungsabsorber und die Halterung weisen eine stets gleiche vom Krümmungsradius der Innenfläche des Schienenradreifens unabhängige Koppelfläche mit gleicher Orientierung wie die Innenfläche auf, und die Koppelflächen der Halterungen für ein Schienenrad bilden ein regelmäßiges Polygon. Insbesondere lehrt diese Druckschrift, daß der Haltering als Schrumpfring ausgebildet wird.

Die DE 298 07 872.4 offenbart einen Schwingungsabsorber bestehend aus einer Schichtfolge von Metallplatten und Dämpfungsmaterial, der an eine in gleicher Orientierung befindliche, schwingende und Körperschall abstrahlende Struktur gekoppelt ist. Das in der Schichtfolge befindliche Dämpfungsmaterial besteht aus einem Metalldraht-Gestrick.

Eines der Hauptprobleme, die bei den bekannten Einspannvorrichtungen vorherrschen, liegt darin, daß beim Bremsen der Schienenräder mit Bremsklötzen sehr hohe Temperaturen an den Radlaufflächen entstehen und diese hohe Temperaturen auf die Einspannvorrichtung übertragen werden können.

Bei klotzgebremsten Schienenrädern entstehen insbesondere bei Dauerbremsungen, die bei gefällegeprägten Fahrstrecken (z.B. Passfahrten in den Alpen) notwendig sind, oder Vollbremsungen sehr hohe Temperaturspitzen bis zu 1000°C, die bis an die Innenflächen der Schienenräder und von dort auf die Einspannvorrichtung weitergeleitet werden, so daß dort Temperaturen von typischerweise 350° bis 400°C entstehen.

Dies führt aufgrund der thermischen Ausdehnung zu Stabilitätsproblemen. Als Folge davon kann es zu einem Herausfallen oder einem Bruch der bekannten Einspannvorrichtungen kommen, was - wie jüngst in einem ähnlichen gelagerten Fall auf tragische Weise bestätigt - zu verheerenden Unfällen führen kann.

Die bekannten Schwingungsabsorber haben zudem den Nachteil, daß sie bei den sehr hohen Temperaturen sehr schnell ihre Wirkung verlieren, da das viskoelastische Dämpfungsmaterial leicht verbrennt oder sehr schnell versprödet, was einen häufigen Austausch der Schwingungsabsorber notwendig macht.

Dieser Austausch ist in der Regel jedoch nicht ohne Ausbau der Einspannvorrichtung möglich.

Der vorliegenden Erfindung liegt die Aufgabe zugrunde, eine verbesserte, effektive und zudem kostengünstige Einspannvorrichtung zu schaffen, welche einfach anbringbar und abnehmbar ist und welche unempfindlich gegenüber Temperaturschwankungen des Schienenrades ist bzw. den üblicherweise geforderten Dauertemperaturen von 400°C standhält.

### VORTEILE DER ERFINDUNG

Die erfindungsgemäße Einspannvorrichtung mit den Merkmalen des Anspruchs 1 und das entsprechende Einspannverfahren gemäß Anspruch 11 weisen gegenüber den bekannten Lösungsansätzen den Vorteil auf, daß der Ring in bereits intern vorgespanntem Zustand leicht und schnell zu montieren ist.

Diese erfindungsgemäße Art der Einspannung hat den besonderen Vorteil, daß die durch materialbedingte, ungleiche thermische Ausdehnungskoeffizienten, auftretenden Spannungen durch die elastische Wirkung der ersten Vorspannungseinrichtung leicht ausgleichbar sind.

Die Erfindung hat außerdem den Vorteil, daß zwei verschiedene Dämpfungsarten in einem System vereinigbar sind. Das sind die Gefügedämpfung zwischen den Segmenten und der Innenfläche des Schienenradreifens und die Dämpfung in den Schwingungsabsorbern, die an den Segmenten angekoppelt sind.

Mit der Erfindung wird insbesondere erreicht, daß die obigen bekannten Schwingungsabsorber auch bei klotzgebremsten Eisenbahnrädern eingesetzt werden können.

Die der vorliegenden Erfindung zugrundeliegende Idee besteht darin, daß die Verbindungseinrichtung jeweils eine erste elastische Vorspannungseinrichtung zwischen den Enden zweier benachbarter Segmente zum Vorspannen der zwei Segmente voneinander weg und jeweils eine zweite kraftschlüssige Vorspannungseinrichtung zum Vorspannen der zwei Segmente gegen die Spannung der ersten elastischen Vorspannungseinrichtung zueinander hin aufweist. Zur Veränderung des Abstands zwischen den Enden der zwei Segmente ist die zweite kraftschlüssige Vorspannungseinrichtung einstellbar. Dabei ermöglicht sie eine Verschiebung der zwei Segmente unter dem Einfluß einer,gegen die Vorspannung der ersten elastischen Vorspannungseinrichtung auf die zwei Segmente wirkenden externen Spannung zueinander hin entsprechend dem eingestellten Abstand. Eben diese Verschiebungsmöglichkeit bewirkt, daß die thermische Ausdehnung kompensierbar ist, ohne daß die auf das Material der Segmente wirkende Belastung und damit das Bruchrisiko steigt.

In den Unteransprüchen finden sich vorteilhafte Weiterbildungen und Verbesserungen der Erfindung.

Gemäß einer bevorzugten Weiterbildung ist die zweite kraftschlüssige Vorspannungseinrichtung nach dem Einspannen abnehmbar und vorzugsweise wiederanbringbar. Dies schafft eine Gewichtsreduktion und verhindert ein unbefugtes Abnehmen der Einspannvorrichtung.

Gemäß einer weiteren bevorzugten Weiterbildung weisen die Segmente einen elektrisch nicht leitenden, harten Oberflächenschutz auf. So läßt sich eine Kontaktkorrosion verhindern.

Gemäß einer weiteren bevorzugten Weiterbildung weist die erste elastische Vorspannungseinrichtung jeweils eine Federeinrichtung auf, die zwischen zueinanderweisenden Stirnseiten an den Enden zweier benachbarter Segmente vorgesehen ist. Solche Federeinrichtungen sind mit der notwendigen Stabilität und Kraftkonstanten herstellbar.

Gemäß einer weiteren bevorzugten Weiterbildung weist die zweite kraftschlüssige Vorspannungseinrichtung jeweils eine Schraubeinrichtung auf, die zwischen zueinander weisenden Schraubeinsätzen an den Enden zweier benachbarter Segmente vorgesehen ist. So läßt sich der Abstand zwischen den Enden der zwei Segmente stufenlos verstellen.

Gemäß einer weiteren bevorzugten Weiterbildung weist die zweite kraftschlüssige Vorspannungseinrichtung jeweils eine Spannbügeleinrichtung auf, die zwischen zueinanderweisenden Spannbügelansätzen an den Enden zweier benachbarter Segmente vorgesehen ist. So läßt sich der Abstand zwischen den Enden der zwei Segmente zwischen einer Einspannungsstellung, d.h. Spannbügel offen und ggfs. abgenommen, und einer Montagestellung, d.h. Spannbügel geschlossen, verstellen.

Gemäß einer weiteren bevorzugten Weiterbildung ist ein Schwingungsabsorbersystem vorgesehen, das pro Segment mindestens einen Schwingungsabsorber mit einer Schichtfolge von Metallplatten und Dämpfungsmaterial aufweist, wobei die Schwingungsabsorber an einer entsprechenden Halterung an der Innenseite der Segmente über eine Koppelfläche ankoppelbar sind.

Gemäß einer weiteren bevorzugten Weiterbildung sind die Koppelflächen vom Krümmungsradius der Innenseite des Schienenrades unabhängig und weisen vorzugsweise eine polygonale Anordnung auf.

Gemäß einer weiteren bevorzugten Weiterbildung sind die Schwingungsabsorber an die entsprechende Halterung an der Innenseite der Segmente über eine an der Koppelfläche vorgesehene thermische Isolatorschicht ankoppelbar. Dies vermindert die direkte Wärmeleitung zu den Schwingungsabsorbern.

Gemäß einer weiteren bevorzugten Weiterbildung besteht das Dämpfungsmaterial der Schwingungsabsorber aus einem Metalldrahtgestrick. Damit lassen sich die Schwingungsabsorber weitgehend wärmeunempfindlich gestalten, da das Metalldrahtgestrick im Gegensatz zu konventionellen Dämpfungsgummis hohen Dauertemperaturen standhält.

Gemäß einer weiteren bevorzugten Weiterbildung weisen die Segmente Kühlrippen zur Wärmeableitung auf, welche vorzugsweise nach außen weisend in der Schienenradebene orientiert sind. Diese Kühlrippen sorgen für eine effektive Wärmeabfuhr durch den kühlenden Fahrtwind. Die gewählte Ausrichtung ist aerodynamisch günstig.

Gemäß einer weiteren bevorzugten Weiterbildung sind zwei bis acht, und vorzugsweise vier, Segmente vorgesehen. Eine derartige Anzahl hat sich in der Praxis als guter Kompromiß zwischen Funktionalität und Kosten herausgestellt.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Draufsicht auf eine erste Ausführungsform der erfindungsgemäßen Einspannvorrichtung;
- Fig. 2: die schematische Querschnittsansicht der ersten Ausführungsform der erfindungsgemäßen Einspannvorrichtung entlang der Linie A-A' in Fig. 1; und
- Fig. 3: eine schematische Querschnittsansicht einer zweiten Ausführungsform der erfindungsgemäßen Einspannvorrichtung entsprechend Fig. 2.

### BESCHREIBUNG DER AUSFÜHRUNGSBEISPIELE

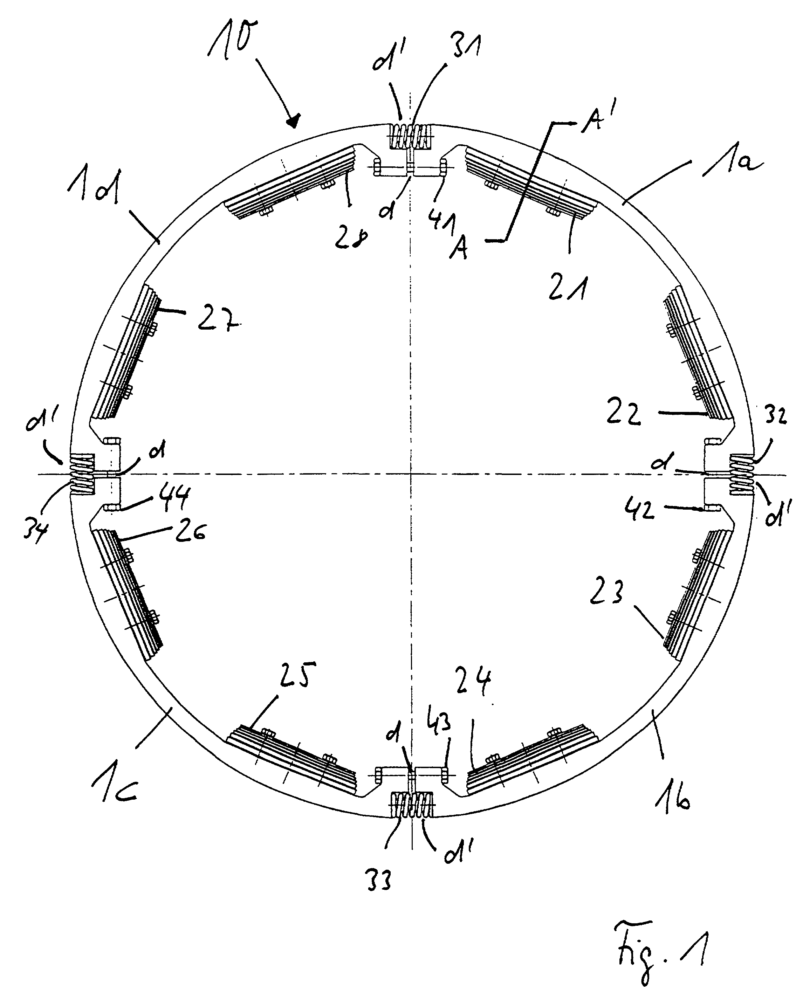

In den Figuren bezeichnen gleiche Bezugszeichen gleiche oder funktionsgleiche Elemente. Fig. 1 zeigt eine schematische Draufsicht auf eine erste Ausführungsform der erfindungsgemäßen Einspannvorrichtung.

In Fig. 1 bezeichnet 10 einen Ring aus vier Segmenten 1a - 1d, 21 - 28 Schwingungsabsorber, 31 - 34 Federn, 41 - 44 Schraubeinrichtungen, d einen Abstand zwischen Ansätzen der Segmente 1a - 1d, d' einen Abstand zwischen Stirnflächen der Segmente 1a - 1d und A - A' eine Schnittrichtung.

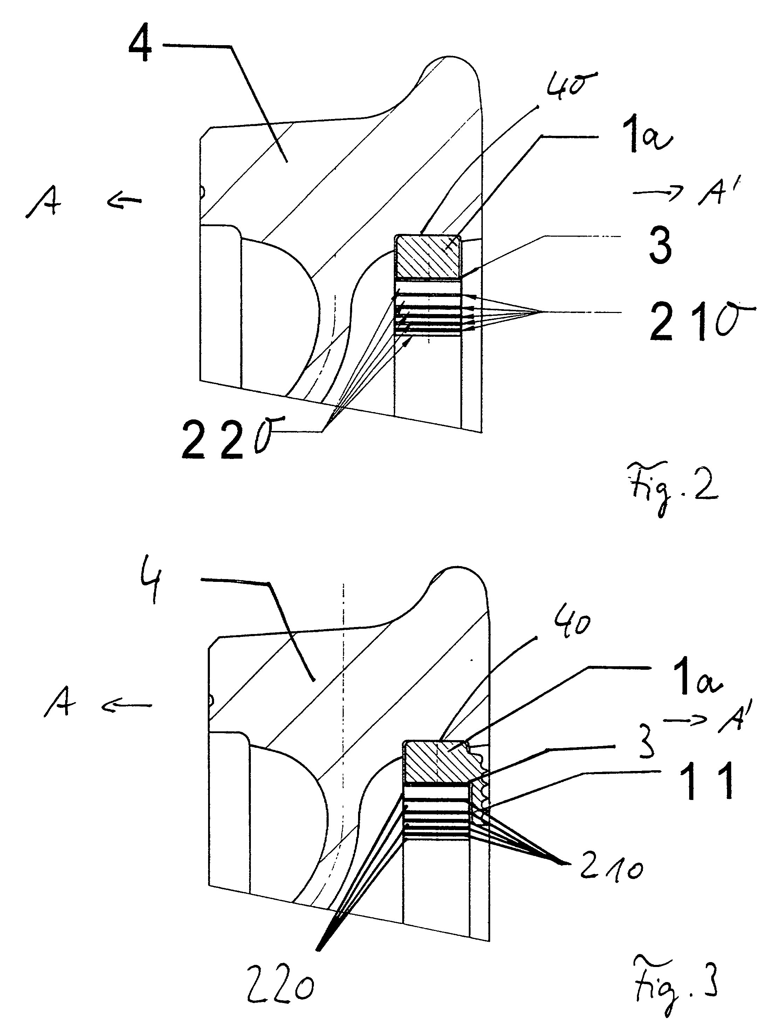

Die Einspannvorrichtung gemäß der ersten Ausführungsform dient zum Einspannen des daran angebrachten Schwingungsabsorbersystems 21 - 28 in eine Innenfläche 40 in einem Schienenrad 4 (vgl. Fig. 2 und 3).

Der aus den vier Segmenten 1a - 1d, die aus einer Aluminiumlegierung, aus Stahl oder aus einem anderen temperaturbeständigen, harten Material bestehen, zusammengesetzte Ring 10 weist eine Verbindungseinrichtung 31 - 34; 41 - 44 zum Verbinden der Enden jeweils zweier benachbarter Segmente auf. Das besondere Merkmal bei dieser Ausführungsform ist der Aufbau dieser Verbindungseinrichtung.

Die Verbindungseinrichtung 31 - 34; 41 - 44 weist jeweils eine erste elastische Vorspannungseinrichtung 31 - 34 zwischen den Enden zweier benachbarter Segmente 1a, 1b; 1b, 1c; 1c, 1d; 1d, 1a zum Vorspannen der zwei Segmente voneinander weg auf. welche bei diesem Beispiel jeweils eine entsprechende Feder 31 - 34 umfaßt, die zwischen den zueinanderweisenden Stirnseiten an den Enden zweier benachbarter Segmente 1a, 1b; 1b, 1c; 1c, 1d; 1d, 1a vorgesehen ist.

Die Verbindungseinrichtung 31 - 34; 41 - 44 weist weiterhin jeweils eine zweite kraftschlüssige Vorspannungseinrichtung 41 - 44 zum Vorspannen der zwei Segmente gegen die Spannung der Federn 31 - 34 zueinander hin auf, welche bei diesem Beispiel jeweils eine entsprechende Schraubeinrichtung 31 - 34 umfaßt, die zwischen zueinander weisenden Schraubeinsätzen an den Enden zweier benachbarter Segmente 1a, 1b; 1b, 1c; 1c, 1d; 1d, 1a vorgesehen ist. Mit anderen Worten sind in das Ringinnere weisende Ansätze an den Enden der Segmente vorgesehen, die eine durchgehende Bohrung aufweisen. Durch die Bohrung ist eine Schraubeinrichtung geführt, z.B. eine Kombination von männlicher Schraube und weiblicher Schraubhülse, mittels welcher der Abstand d gegen die Wirkung der jeweiligen Feder einstellbar ist.

Die Schraubeinrichtung ist so gestaltet, daß eine Verschiebung der zwei benachbarten Segmente unter dem Einfluß einer gegen Federspannung auf die zwei Segmente wirkenden externen Spannung zueinander hin entsprechend dem eingestellten Abstand d möglich ist. Das heißt es ist ein elastisches Spiel der Größe d vorhanden.

Das an der Innenseite des Ringes vorgesehene Schwingungsabsorbersystem weist pro Segment 1a - 1d zwei an sich bekannte Schwingungsabsorber 21 - 28 mit einer Schichtfolge von Metallplatten 220 und Dämpfungsmaterial 210 auf, wobei die Schwingungsabsorber 21 - 28 an einer entsprechenden (nicht dargestellten) Halterung an der Innenseite der Segmente 1a - 1d über eine Koppelfläche ankoppelbar sind. Wie Fig. 1 entnehmbar, sind Koppelflächen vom Krümmungsradius der Außenseite des Ringes 10 und damit der Innenseite des Schienenrades 4 unabhängig und haben eine polygonale Anordnung. Nähere Details dazu sind der oben zitierten DE 44 42 779 C2 entnehmbar.

Fig. 2 zeigt die schematische Querschnittsansicht der ersten Ausführungsform der erfindungsgemäßen Einspannvorrichtung entlang der Linie A-A' in Fig. 1.

In Fig. 2 bezeichnet zusätzlich zu den bereits eingeführten Bezugszeichen 4 ein Schienenrad, 40 eine Innenfläche vom Schienenrad 4, 3 einen thermischer Isolator, 210 Dämpfungsmaterial und 220 Metallplatten.

Die Schwingungsabsorber 21 - 28 sind, wie in Fig. 2 erkennbar, an die entsprechende Halterung an der Innenseite der Segmente 1a - 1d über eine an der Koppelfläche vorgesehene thermische Isolatorschicht ankoppelbar sind, um das Dämpfungsmaterial zusätzlich zu schützen.

Fig. 3 zeigt eine schematische Querschnittsansicht einer zweiten Ausführungsform der erfindungsgemäßen Einspannvorrichtung entsprechend Fig. 2.

In Fig. 3 bezeichnet zusätzlich zu den bereits eingeführten Bezugszeichen 11 eine Kühlrippe, wobei die Segmente 1a - 1d solche Kühlrippen 11 welche nach außen weisend in der Schienenradebene orientiert sind, aufweisen. Sie haben die Aufgabe die entstehenden hohen Temperaturen abzuleiten, so daß insbesondere das Dämpfungsmaterial 210 der Schwingungsabsorber nicht zerstört wird.

Mit Ausnahme dieser Kühlrippen 11 sind die erste und die zweite Ausführungsform identisch.

Im folgenden wird die Vorgehensweise zum Einspannen der mit Bezug auf Fig. 1 und 2 bzw. 3 beschriebenen Einspannvorrichtung näher erläutert.

Zunächst erfolgt Einstellen der Schraubeinrichtung 41 - 44 zur Veränderung der Ringweite des Ringes 10, um die Ringweite kleiner als die Einlegeweite des Schienenrades 4 zu gestalten (Abstand d wird kleiner). Dann erfolgt das Einlegen der Einspannvorrichtung in das Schienenrad (4).

Als nächstes erfolgt ein Einstellen der Schraubeinrichtung 41 - 44 in die entgegengesetzte Richtung, so daß die Außenfläche der Segmente 1a - 1d unter dem Einfluß der Vorspannung der Federn 31 - 34 an die Innenfläche 40 des Schienenrades 4 derart gepreßt wird, daß sie beim Betrieb nicht verrutschen können.

Die Dimensionierung sollte derart sein, daß im eingespannten Zustand zwischen den Segmenten 1a - 1d von Null verschiedene Abstände d vorgesehen sind, um das besagte elastische Spiel gegenüber thermischer Ausdehnung zu gewährleisten.

Soll nach einer gewissen Betriebsdauer die Einspannvorrichtung ausgebaut werden, um das inzwischen verschlissene Schienenrad auszutauschen, erfolgt lediglich ein Einstellen der Schraubeinrichtung 41 - 44 zur Veränderung der Ringweite des Ringes 10, um die Ringweite wieder kleiner als die Einlegeweite des Schienenrades 4 zu gestalten, und dann ein Entfernen der Einspannvorrichtung aus dem Schienenrad 4. Dann läßt sich der alte Absorber mit der Einspannvorrichtung in ein neues Schienenrad einsetzen.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Insbesondere kann die zweite kraftschlüssige Vorspannungseinrichtung so gestaltet sein, daß sie nach dem Einspannen abnehmbar und vorzugsweise wiederanbringbar ist, beispielsweise in Form einer Spannbügeleinrichtung, die zwischen zueinanderweisenden Spannbügelansätzen an den Enden zweier benachbarter Segmente vorgesehen ist.

Der Ring und die entsprechende Ausnehmung im Schienenrad müssen nicht kreisförmig sein, sondern können eine andere zweckmäßigen Form besitzen, z.B. quadratisch, dreieckig, usw.

Auch ist die Einspannvorrichtung nicht auf Schwingungsabsorber beschränkt, sondern kann prinzipiell auch für beliebige andere Einsätze verwendet werden.

Auch kann eine zusätzliche Dämpfungseinrichtung, welche vorzugsweise ein Metalldrahtgestrick aufweist, zwischen dem Schienenrad und der Einspannvorrichtung eingelegt werden, um die Vibrationen noch stärker zu dämpfen. Außerdem reduziert diese Dämpfungseinrichtung zusätzlich die Gefahr einer Korrosionsverbindung.

### BEZUGSZEICHENLISTE:

| | |
|---|---|
| 10 | Ring |
| 1a-1d | Segmente |
| 21-28 | Schwingungsabsorber |
| 31-34 | Federn |
| 41-44 | Schraubeinrichtungen |
| d | Abstand zwischen Ansätzen |
| d' | Abstand zwischen Stirnflächen |
| A-A' | Schnittrichtung |
| 4 | Schienenrad |
| 40 | Innenfläche von 4 |
| 3 | thermischer Isolator |
| 210 | Dämpfungsmaterial |
| 220 | Metallplatten |
| 11 | Kühlrippe |

## Patentansprüche

1. Einspannvorrichtung für ein Schienenrad (4), insbesondere zum Einspannen eines daran angebrachten Schwingungsabsorbersystems (21 - 28) in das Schienenrad (4), wobei die Einspannvorrichtung in eine Innenfläche (40) des Schienenrades (4) einspannbar ist, mit:
einem aus zumindest zwei Segmenten (1a - 1d) zusammensetzbaren Ring (10) und einer Verbindungseinrichtung (31 - 34; 41 - 44) zum Verbinden der Enden jeweils zweier benachbarter Segmente (1a, 1b; 1b, 1c; 1c, 1d; 1d, 1a), **dadurch gekennzeichnet, daß**
die Verbindungseinrichtung (31 - 34; 41 - 44) jeweils eine erste elastische Vorspannungseinrichtung (31 - 34) zwischen den Enden zweier benachbarter Segmente (1a, 1b; 1b, 1c; 1c, 1d; 1d, 1a) zum Vorspannen der zwei Segmente voneinander weg und jeweils eine zweite kraftschlüssige Vorspannungseinrichtung (41 - 44) zum Vorspannen der zwei Segmente gegen die Spannung der ersten elastischen Vorspannungseinrichtung (31 - 34) zueinander hin aufweist; und
daß die zweite kraftschlüssige Vorspannungseinrichtung (41 - 44) zur Veränderung des Abstands (d) zwischen den Enden der zwei Segmente einstellbar ist und eine Verschiebung der zwei Segmente unter dem Einfluß einer gegen die Vorspannung der ersten elastische Vorspannungseinrichtung (31 - 34) auf die zwei Segmente wirkenden externen Spannung zueinander hin entsprechend dem eingestellten Abstand (d) ermöglicht.

2. Einspannvorrichtung nach Anspruch 1, **dadurch gekennzeichnet, daß** die zweite kraftschlüssige Vorspannungseinrichtung (41 - 44) nach dem Einspannen abnehmbar und vorzugsweise wiederanbringbar ist.

3. Einspannvorrichtung nach Anspruch 1 oder 2, **dadurch gekennzeichnet, daß** die Segmente (1a - 1d) einen elektrisch nicht leitenden, harten Oberflächenschutz aufweisen.

4. Einspannvorrichtung nach Anspruch 1, 2 oder 3, **dadurch gekennzeichnet, daß** die erste elastische Vorspannungseinrichtung (31 - 34) jeweils eine Federeinrichtung (31 - 34) aufweist, die zwischen zueinanderweisenden Stirnseiten an den Enden zweier benachbarter Segmente (1a, 1b; 1b, 1c; 1c, 1d; 1d, 1a) vorgesehen ist.

5. Einspannvorrichtung nach Anspruch 1 bis 4, **dadurch gekennzeichnet, daß** die zweite kraftschlüssige Vorspannungseinrichtung (41 - 44) jeweils eine Schraubeinrichtung (31 - 34) aufweist, die zwischen zueinander weisenden Schraubeinsätzen an den Enden zweier benachbarter Segmente (1a, 1b; 1b, 1c; 1c, 1d; 1d, 1a) vorgesehen ist.

6. Einspannvorrichtung nach einem der Ansprüche 1 bis 5, **dadurch gekennzeichnet, daß** die zweite kraftschlüssige Vorspannungseinrichtung (41 - 44) jeweils eine Spannbügeleinrichtung aufweist, die zwischen zueinanderweisenden Spannbügelansätzen an den Enden zweier benachbarter Segmente (1a, 1b; 1b, 1c; 1c, 1d; 1d, 1a) vorgesehen ist.

7. Einspannvorrichtung nach einem der vorhergehenden Ansprüche, **dadurch gekennzeichnet, daß** ein Schwingungsabsorbersystem vorgesehen ist, das pro Segment (1a- 1d) mindestens einen Schwingungsabsorber (21 - 28) mit einer Schichtfolge von Metallplatten (220) und Dämpfungsmaterial (210) aufweist, wobei die Schwingungsabsorber (21 - 28) an einer entsprechenden Halterung an der Innenseite der Segmente (1a - 1d) über eine Koppelfläche ankoppelbar sind.

8. Einspannvorrichtung nach Anspruch 7, **dadurch gekennzeichnet, daß** Koppelflächen vom'Krümmungsradius der Innenseite des Schienenrades (4) unabhängig sind und vorzugsweise eine polygonale Anordnung aufweisen.

9. Einspannvorrichtung nach einem der vorhergehenden Ansprüche 7 oder 8, **dadurch gekennzeichnet, daß** die Schwingungsabsorber (21 - 28) an die entsprechende Halterung an der Innenseite der Segmente (1a - 1d) über eine an der Koppelfläche vorgesehene thermische Isolatorschicht ankoppelbar sind.

10. Einspannvorrichtung nach einem der vorhergehenden Ansprüche 7, 8 oder 9, **dadurch gekennzeichnet, daß** das Dämpfungsmaterial (210) der Schwingungsabsorber (21 - 28) aus einem Metalldrahtgestrick besteht.

11. Einspannvorrichtung nach einem der vorhergehenden Ansprüche, **dadurch gekennzeichnet, daß** die Segmente (1a - 1d) Kühlrippen (11) zur Wärmeableitung aufweisen, welche vorzugsweise nach außen weisend in der Schienenradebene orientiert sind.

12. Einspannvorrichtung nach einem der vorhergehenden Ansprüche, **dadurch gekennzeichnet, daß** zwei bis acht, und vorzugsweise vier, Segmente (1a - 1d) vorgesehen sind.

13. Einspannverfahren zum Einspannen der Einspannvorrichtung nach mindestens einem der vorhergehenden Ansprüche in ein Schienenrad (4),
**gekennzeichnet durch** die Schritte :
Bereitstellen des Schienenrades (4);
Einstellen der zweiten kraftschlüssigen Vorspannungseinrichtung (41 - 44) zur Veränderung der Ringweite des Ringes (10), um die Ringweite kleiner als die Einlegeweite des Schienenrades (4) zu gestalten;
Einlegen der Einspannvorrichtung in das Schienenrad (4); und
Einstellen der zweiten kraftschlüssigen Vorspannungseinrichtung (41 - 44) zur Entspannung der zweiten kraftschlüssigen Vorspannungseinrichtung (41 - 44), so daß die Außenfläche der Segmente (1a - 1d) unter dem Einfluß der Vorspannung der ersten elastische Vorspannungseinrichtung (31 - 34) an die Innenfläche des Schienenrades (4) gepreßt wird und dabei zwischen den Segmenten (1a - 1d) von Null verschiedene Abstände (d) vorgesehen sind.

14. Einspannverfahren nach Anspruch 13, **gekennzeichnet durch** den Schritt des Abnehmens der zweiten kraftschlüssigen Vorspannungseinrichtung (41 - 44) nach der Entspannung.

15. Einspannverfahren nach Anspruch 13 oder 14, **gekennzeichnet durch** den Schritt des Bereitstellens des Schienenrades (4) mit einer an der Innenfläche des Schienenrads (4) befindlichen Nut (40), in die die Segmente eingelegt und eingespannt werden.

16. Einspannverfahren nach einem der Ansprüche 13 bis 15, **gekennzeichnet durch** die Schritte:
Einstellen der zweiten kraftschlüssigen Vorspannungseinrichtung (41 - 44) zur Veränderung der Ringweite des Ringes (10), um die Ringweite kleiner als die Einlegeweite des Schienenrades (4) zu gestalten; und
Entfernen der Einspannvorrichtung aus dem Schienenrad (4).

17. Einspannverfahren nach einem der Ansprüche 13 bis 16, **gekennzeichnet durch** den Schritt:
Einlegen einer Dämpfungseinrichtung, welche vorzugsweise ein Metalldrahtgestrick aufweist, zwischen dem Schienenrad (4) und der Einspannvorrichtung.

## Claims

1. Clamping device for a rail wheel (4), in particular for clamping a vibration absorber system (21-28) mounted thereon into the rail wheel (4), the clamping device being clampable into an inner surface (40) of the rail wheel (4), with a ring (10) capable of being assembled from at least two segments (1a-1d) and with a connecting means (31-34; 41-44) for connecting the ends of two adjacent segments (1a, 1b; 1b, 1c; 1c, 1d; 1d, 1a) in each case, **characterized in that** the connecting means (31-34; 41-44) has in each case a first elastic pretensioning means (31-34) between the ends of two adjacent segments (1a, 1b; 1b, 1c; 1c, 1d; 1d, 1a), for pretensioning the two segments away from one another, and in each case a second non-positive pretensioning means (41-44) for pretensioning the two segments towards one another counter to the tension of the first elastic pretensioning means (31-34), and **in that** the second non-positive pretensioning means (41-44) is adjustable for varying the distance (d) between the ends of the two segments and allows a displacement of the two segments towards one another, according to the adjusted distance (d), under the influence of an external tension acting on the two segments counter to the pretension of the first elastic pretensioning means (31-34).

2. Clamping device according to Claim 1, **characterized in that** the second non-positive pretensioning means (41-44) is removable and preferably reattachable after clamping.

3. Clamping device according to Claim 1 or 2, **characterized in that** the segments (1a-1d) have an electrically non-conductive hard surface protection.

4. Clamping device according to Claim 1, 2 or 3, **characterized in that** the first elastic pretensioning means (31-34) has in each case a spring means (31-34) which is provided between mutually confronting end faces at the ends of two adjacent segments (1a, 1b; 1b, 1c; 1c, 1d; 1d, 1a).

5. Clamping device according to Claims 1 to 4, **characterized in that** the second non-positive pretensioning means (41-44) has in each case a screwing means (31-34) which is provided between mutually confronting screwing inserts at the ends of two adjacent segments (1a, 1b; 1b, 1c; 1c, 1d; 1d, 1a).

6. Clamping device according to one of Claims 1 to 5, **characterized in that** the second non-positive pretensioning means (41-44) has in each case a clamping-bracket means which is provided between mutually confronting clamping-bracket extensions at the ends of two adjacent segments (1a, 1b; 1b, 1c; 1c, 1d; 1d, 1a).

7. Clamping device according to one of the preceding claims, **characterized in that** a vibration absorber system is provided, which has for each segment (1a-1d) at least one vibration absorber (21-28) with a layered series of metal plates (220) and damping material (210), the vibration absorbers (21-28) being couplable to a corresponding holding means on the inside of the segments (1a-1d) via a coupling surface.

8. Clamping device according to Claim 7, **characterized in that** coupling surfaces are independent of the radius of curvature of the inside of the rail wheel (4) and preferably have a polygonal arrangement.

9. Clamping device according to one of the preceding Claims 7 or 8, **characterized in that** the vibration absorbers (21-28) are couplable to the corresponding holding means on the inside of the segments (1a-1d) via a thermal insulator layer provided on the coupling surface.

10. Clamping device according to one of the preceding Claims 7, 8 or 9, **characterized in that** the damping material (210) of the vibration absorbers (21-28) consists of a knitted metal-wire cloth.

11. Clamping device according to one of the preceding claims, **characterized in that** the segments (1a-1d) have cooling ribs (11) for heat dissipation, which are oriented preferably outwards in the rail-wheel plane.

12. Clamping device according to one of the preceding claims, **characterized in that** two to eight, preferably four, segments (1a-1d) are provided.

13. Clamping method for clamping the clamping device according to at least one of the preceding claims into a rail wheel (4), **characterized by** the steps:
provision of the rail wheel (4);
adjustment of the second non-positive pretensioning means (41-44) to vary the ring width of the ring (10), in order to make the ring width smaller than the introduction width of the rail wheel (4);
introduction of the clamping device into the rail wheel (4); and
adjustment of the second non-positive pretensioning means (41-44) in order to detension the second non-positive pretensioning means (41-44), so that, under the influence of the pretension of the first elastic pretensioning means (31-34), the outer surface of the segments (1a-1d) is pressed against the inner surface of the rail wheel (4) and at the same time distances (d) different from zero are provided between the segments (1a-1d).

14. Clamping method according to Claim 13, **characterized by** the step of removing the second non-positive pretensioning means (41-44) after detensioning.

15. Clamping method according to Claim 13 or 14, **characterized by** the step of providing the rail wheel (4) with a groove (40) which is located on the inner surface of the rail wheel (4) and into which the segments are introduced and clamped.

16. Clamping method according to one of Claims 13 to 15, **characterized by** the steps:
adjustment of the second non-positive pretensioning means (41-44) to vary the ring width of the ring (10), in order to make the ring width smaller than the introduction width of the rail wheel (4); and
extraction of the clamping device from the rail wheel (4).

17. Clamping method according to one of Claims 13 to 16, **characterized by** the step:
introduction of a damping means, which preferably has a knitted metal-wire cloth, between the rail wheel (4) and the clamping device.

## Revendications

1. Dispositif de fixation pour une roue ferroviaire (4), en particulier pour fixer dans la roue ferroviaire (4) un système absorbeur de vibrations (21 - 28) monté dessus, le dispositif de fixation pouvant être monté dans une surface intérieure (40) de la roue ferroviaire (4), avec :
un anneau (10) pouvant être constitué à partir d'au moins deux segments (1a - 1d) et d'un dispositif de liaison (31 - 34 ; 41 - 44) pour relier les extrémités de deux segments voisins respectifs (1a, 1b ; 1b, 1c ; 1c, 1d ; 1d, 1a), **caractérisé en ce que**
le dispositif de liaison (31 - 34 ; 41 - 44) comporte respectivement un premier dispositif prétendeur élastique (31 - 34) entre les extrémités de deux segments voisins (1a, 1b ; 1b, 1c ; 1c, 1d ; 1d, 1a) pour la prétension des deux segments dans le sens tendant à les écarter, et respectivement un deuxième dispositif prétendeur par transmission de force (41 - 44) pour la prétension des deux segments à l'encontre de la tension du premier dispositif prétendeur élastique (31 - 34) dans le sens tendant à les rapprocher ; et
**en ce que**, pour la modification de la distance (d) entre les extrémités des deux segments, le deuxième dispositif prétendeur par transmission de force (41 - 44) est réglable, et permet un décalage des deux segments sous l'influence d'une tension externe agissant sur les deux segments à l'encontre de la prétension du premier dispositif prétendeur élastique (31 - 34), dans le sens tendant à les rapprocher en fonction de la distance (d) réglée.

2. Dispositif de fixation selon la revendication 1, **caractérisé en ce que** le deuxième dispositif prétendeur par transmission de force (41 - 44) est amovible après la fixation et peut être de préférence remonté.

3. Dispositif de fixation selon la revendication 1 ou 2, **caractérisé en ce que** les segments (1a - 1d) présentent une protection de surface dure non conductrice de l'électricité.

4. Dispositif de fixation selon la revendication 1, 2 ou 3, **caractérisé en ce que** le premier dispositif prétendeur élastique (31 - 34) comporte respectivement un dispositif à ressorts (31 - 34) qui est prévu entre les surfaces frontales dirigées l'une vers l'autre aux extrémités de deux segments voisins (1a, 1b ; 1b, 1c ; 1c, 1d ; 1d, 1a).

5. Dispositif de fixation selon l'une quelconque des revendications 1 à 4, **caractérisé en ce que** le deuxième dispositif prétendeur par transmission de force (41 - 44) comporte respectivement un dispositif à vis (31 - 34) qui est prévu entre des inserts à vis dirigés l'un vers l'autre aux extrémités de deux segments voisins (1a, 1b ; 1b, 1c ; 1c, 1d ; 1d, 1a).

6. Dispositif de fixation selon l'une quelconque des revendications 1 à 5, **caractérisé en ce que** le deuxième dispositif prétendeur par transmission de force (41 - 44) comporte respectivement un dispositif à étriers de tension qui est prévu entre des épaulements d'étriers de tension dirigées l'un vers l'autre aux extrémités de deux segments voisins (1a, 1b ; 1b, 1c ; 1c, 1d ; 1d, 1a).

7. Dispositif de fixation selon l'une quelconque des revendications précédentes, **caractérisé en ce qu'**un système absorbeur de vibrations est prévu, qui comprend par segment (1a - 1d) au moins un absorbeur de vibrations (21 - 28) avec une suite de couches de plaques métalliques (220) et de matériau amortisseur (210), les absorbeurs de vibrations (21 - 28) peuvant être couplés à une fixation adéquate à la face intérieure des segments (1a - 1d) par une surface de couplage.

8. Dispositif de fixation selon la revendication 7, **caractérisé en ce que** les surfaces de couplage sont indépendantes du rayon de courbure de la face intérieure de la roue ferroviaire (4) et présentent de préférence une disposition polygonale.

9. Dispositif de fixation selon l'une des revendications précédentes 7 ou 8, **caractérisé en ce que** les absorbeurs de vibrations (21 - 28) peuvent être accouplés à la fixation correspondante à la face intérieure des segments (1a - 1d) par une couche isolante thermique prévue à la surface de couplage.

10. Dispositif de fixation selon l'une des revendications précédentes 7, 8 ou 9, **caractérisé en ce que** le matériau amortisseur (210) des absorbeurs de vibrations (21 - 28) consiste en une tresse de fils métalliques.

11. Dispositif de fixation selon l'une quelconque des revendications précédentes, **caractérisé en ce que** les segments (1a - 1d) comportent des ailettes de refroidissement (11) pour l'évacuation de la chaleur, lesquelles sont orientées de préférence dans le plan de la roue ferroviaire, tournées vers l'extérieur.

12. Dispositif de fixation selon l'une quelconque des revendications précédentes, **caractérisé en ce que** deux à huit, et de préférence quatre segments (1a - 1d) sont prévus.

13. Procédé de fixation pour la fixation du dispositif de fixation selon l'une au moins des revendications précédentes dans une roue ferroviaire (4), **caractérisé par** les étapes :
mise à disposition de la roue ferroviaire (4) ;
réglage du deuxième dispositif prétendeur par transmission de force (41 - 44) pour la modification de la largeur d'anneau de l'anneau (10), pour rendre la largeur de l'anneau plus petite que la largeur d'introduction de la roue ferroviaire (4).
mise en place du dispositif de fixation dans la roue ferroviaire (4) ; et
réglage du deuxième dispositif prétendeur par transmission de force (41 - 44) pour la détente du deuxième dispositif prétendeur par transmission de force (41 - 44), de telle sorte que la surface extérieure des segments (1a - 1d) s'applique sous l'influence du premier dispositif prétendeur élastique (31 - 34) sur la surface intérieure de la roue ferroviaire (4) et que, ce faisant, des distances (d) différentes de zéro soient prévues entre les segments (1a - 1d).

14. Procédé de fixation selon la revendication 13, **caractérisé par** l'étape du démontage du deuxième dispositif prétendeur par transmission de force (41 - 44) après la détente.

15. Procédé de fixation selon la revendication 13 ou 14, **caractérisé par** l'étape de la mise à disposition de la roue ferroviaire (4) avec une rainure (40) se trouvant sur la surface intérieure de la roue ferroviaire (4), rainure dans laquelle les segments sont insérés et fixés.

16. Procédé de fixation selon l'une quelconque des revendications 13 à 15, **caractérisé par** les étapes :
réglage du deuxième dispositif prétendeur par transmission de force (41 - 44) pour la modification de la largeur de l'anneau (10), pour rendre la largeur de l'anneau plus petite que la largeur d'introduction de la roue ferroviaire (4) ; et
démontage du dispositif de fixation depuis la roue ferroviaire (4).

17. Procédé de fixation selon l'une quelconque des revendications 13 à 16, **caractérisé par** l'étape
insertion d'un dispositif amortisseur, lequel comporte de préférence une tresse de fils métalliques, entre la roue ferroviaire (4) et le dispositif de montage.
